# EUROPÄISCHE PATENTANMELDUNG

(11) **EP 4 775 011 A1**
(43) Veröffentlichungstag der Anmeldung: **15.07.2026**
(21) Anmeldenummer: 25219845.2
(22) Anmeldetag: 01.12.2025
(51) Int. Cl.: A01C 15/00, A01C 17/00

(54) **SCHLEUDERSTREUER MIT EINEM BEHÄLTER**

(30) Priorität: 08.01.2025 DE 202025100059 U
(71) Anmelder: RAUCH Landmaschinenfabrik GmbH, 77836 Rheinmünster (DE)
(72) Erfinder: Doll, Franz, 76547 Sinzheim (DE); Zeitvogel, Thomas Markus, 77836 Rheinmünster (DE)
(74) Vertreter: Lichti - Patentanwälte Partnerschaft mbB

(57) **Zusammenfassung**

Es wird ein Schleuderstreuer zum Ausbringen von Verteilgut vorgeschlagen, welcher einen von einem Rahmen (1) getragenen Behälter (2) zur Bevorratung des Verteilgutes umfasst, wobei der Behälter einen sich im Wesentlichen trichterförmig nach unten verjüngenden Abschnitt (3) mit einer Auslauföffnung (4) aufweist. Der Auslauföffnung ist ein Dosierorgan (5) nachgeordnet, welchem wiederum eine Verteilerscheibe (6) nachgeordnet ist. Es is vorgesehen, dass die Auslauföffnung an einem separaten Auslaufteil (2c) des Behälters angeordnet ist, welches lösbar an dem sich im Wesentlichen trichterförmig nach unten verjüngenden Abschnitt des Behälters befestigt ist und beispielsweise aus einem Kunststoffwerkstoff gefertigt sein kann, wie z.B. in Form eines Spritzgussteils. Ferner kann vorgesehen sein, dass ein mit der Auslauföffnung versehener Boden des Auslaufteils als separates Bodenteil (2d) ausgebildet ist, welches an dem Auslaufteil festgelegt ist.

## Beschreibung

Die Erfindung betrifft einen Schleuderstreuer zum Ausbringen von Verteilgut, umfassend:
- wenigstens einen von einem Rahmen getragenen Behälter zur Bevorratung des Verteilgutes, wobei der Behälter wenigstens einen, sich im Wesentlichen trichterförmig nach unten verjüngenden Abschnitt mit wenigstens einer Auslauföffnung aufweist,
- wenigstens ein der Auslauföffnung nachgeordnetes Dosierorgan, und
- wenigstens eine dem Dosierorgan nachgeordnete Verteilerscheibe.

Schleuderstreuer der vorgenannten Art, welche auch als Zentrifugalstreuer bezeichnet werden, finden insbesondere für landwirtschaftliche Zwecke zum Ausbringen von pulver- oder partikelförmigem Verteilgut, wie **z.B.** Dünger, Kalk, Saatgut oder anderen partikulären Feststoffen, verbreitete Anwendung. Neben Einscheibenstreuern mit nur einer drehangetriebenen und mit Wurfflügeln versehenen Verteilerscheibe haben sich dabei insbesondere Zweischeibenstreuer bewährt, welche zwei, üblicherweise unabhängig voneinander drehangetriebene und mit Wurfflügeln versehene Verteilerscheiben aufweisen. Gattungsgemäße Schleuderstreuer existieren beispielsweise in gezogener Bauart als Selbstfahrer oder Mitläufer sowie als Anbaugeräte, welche von einem Dreipunktkraftheber einer Zugmaschine, wie eines Traktors, aufgenommenen werden können. Derartige Schleuderstreuer umfassen einen von einem Rahmen getragenen, das Verteilgut aufnehmenden Behälter, welcher üblicherweise sich im Wesentlichen trichterförmig nach unten verjüngende Abschnitte umfasst, an deren unterem Ende eine jeweilige Auslauföffnung angeordnet ist. Im Falle von Zweischeibenstreuern umfasst der Behälter zwei sich im Wesentlichen trichterförmig nach unten verjüngende Abschnitte mit je einer Auslauföffnung. Der bzw. einer jeweiligen Auslauföffnung ist (je) ein Dosierorgan nachgeordnet, um das auszubringende Verteilgut in der gewünschten Menge - oder genauer: mit dem gewünschten Massenstrom - dem Behälter zu entnehmen. Das jeweilige Dosierorgan weist üblicherweise einen Dosierschieber auf, welcher mittels eines geeigneten Stellorgans auf- und zusteuerbar, um je nach gewünschter Verteilungsbreite des Verteilgutes auf dem Boden, je nach Fahrgeschwindigkeit und je nach den physikalischen Eigenschaften des Verteilgutes, wie beispielsweise dessen Rieselfähigkeit, den gewünschten Massenstrom einstellen zu können. Alternativ kann das Dosierorgan zu demselben Zweck z.B. auch eine steuerbar drehangetriebenes Nocken- oder Zellenradwalze umfassen. Im Falle von modernen Zweischeibenstreuern sind die Dosierorgane üblicherweise unabhängig voneinander steuer- und/oder regelbar. Unterhalb der Dosierorgane befinden sich Verteilerscheiben, deren Drehzahl im Falle von modernen Zweischeibenstreuern unabhängig voneinander steuer- und/oder regelbar sein kann und welche üblicherweise mit Wurfschaufeln bestückt sind und dazu dienen, das pulver- oder partikelförmige Verteilgut über die gewünschte Arbeitsbreite zu verteilen. Die in der Regel um vertikale Drehachsen rotationsangetriebenen Verteilerscheiben rotieren dabei in der Regel gegensinnig, wobei die in Fahrtrichtung rechte Verteilerscheibe entgegen und die in Fahrtrichtung linke Verteilerscheibe im Uhrzeigersinn rotiert, wenn man die Verteilerscheiben von oben betrachtet.

Im Falle von Winterdienststreumaschinen dient der Behälter vornehmlich zur Aufnahme von in der Regel granulatförmigem Splitt, Sand und/oder Streusalz, wobei die Funktion einer solchen Winterdienststreumaschine weitestgehend jener eines oben beschriebenen landwirtschaftlichen Schleuderstreuers entspricht.

Anlässlich des sogenannten Normalstreuens mittels Zweischeibenstreuern wird in der Landwirtschaft eine gleichmäßige Streudichte durch Überlappen der von den Verteilerscheiben abgeworfenen Streufächer beim Befahren benachbarter Fahrgassen erreicht. Das Verteilgut wird hierbei von den Verteilerscheiben zu beiden Seiten des Zweischeibenstreuers gleichmäßig, aber mit unterschiedlicher, von innen nach außen abnehmender Streudichte verteilt. Hierbei sind flachflankige, wie insbesondere im Wesentlichen trapez- oder dreieckförmige Streubilder, besonders geeignet zur Erzielung einer gleichmäßigen Streudichte, wobei beim Anschlussfahren in der benachbarten Fahrgasse die Streubilder derart überlappt werden, dass sich eine gleichmäßige Verteilung über die gesamte Arbeitsbreite ergibt. Derartige, beim Normalstreuen erwünschte Streubilder führen jedoch an der Feldgrenze, wo nur einseitig gestreut wird und folglich ein Überlappen nicht stattfindet, zu einer Unterversorgung, wenn nur bis zur Feldgrenze gestreut wird, oder aber zum Überstreuen der Grenze über den Feldrand hinaus und damit zu entsprechenden Düngemittelverlusten. In vielen Fällen muss ein solches Überstreuen ohnehin dringend vermieden werden, wenn beispielsweise die Saat oder Frucht auf dem Nachbarfeld keine oder eine andere Nährstoffversorgung benötigt oder aber entlang der Grenze ein Gewässer oder eine Straße verläuft. Ähnliches gilt für im Innern des Feldes befindliche Hindernisse, welche nicht bestreut werden sollen bzw. dürfen, wie Baumgruppen, Buschwerk, Gewässer, Gesteinsformationen oder dergleichen. Um beim Grenzstreuen eine gleichmäßige Streudichte zu gewährleisten und ein Überstreuen der Grenze zu vermeiden, muss auf der Grenzseite des Zweischeibenstreuers für ein steilflankiges Streubild gesorgt werden, während zur Feldmitte hin das übliche flache Streubild beibehalten werden muss. Um ein solches Grenz- oder Randstreuen zu bewerkstelligen, können einerseits beispielsweise sogenannte Grenzstreueinrichtungen zum Einsatz gelangen, welche einen Teil des von der feldrandseitigen Verteilerscheibe abgeschleuderte Verteilgut mechanisch vom Feldrand fort umlenken. Andererseits verfügen moderne Zweischeibenstreuer zu diesem Zweck häufig über eine einem jeweiligen Dosierorgan zugeordnete Aufgabepunkt-Verstelleinrichtung zur Verstellung des Aufgabepunktes des Verteilgutes auf die jeweilige Verteilerscheibe, wobei ein Grenz- oder Randstreuen in diesem Fall dadurch gewährleistet werden kann, indem die Drehzahl des Antriebs der grenznahen Verteilerscheibe reduziert und/oder deren Aufgabepunkt verlagert wird, sei es im Wesentlichen in Umfangsrichtung der grenznahen Verteilerscheibe entgegen deren Drehrichtung oder sei es im Wesentlichen in Radialrichtung der grenznahen Verteilerscheibe nach außen.

In der DE 10 2005 015 228 A1 geht es um einen insbesondere als Zweischeibenstreuer ausgestalteten Schleuderstreuer, dessen Vorratsbehälter einen von einem Rahmen getragenen Behälter zur Bevorratung des Verteilgutes aufweist, wobei der Behälter einen sich etwa trichterförmig nach unten verjüngenden Abschnitt mit einer Auslauföffnung umfasst, welcher fest mit dem Behälter verbunden ist. Der Auslauföffnung des trichterförmig verjüngten Abschnittes des Behälters ist ein Dosierorgan nachgeordnet, unterhalb welchem die Verteilerscheibe um eine vertikale Achse drehangetrieben gelagert ist.

Der zur Bevorratung des Verteilgutes dienende Behälter, welcher üblicherweise aus Metallwerkstoffen, wie Stahl, gefertigt ist, ist insbesondere in seinem unteren Bereich bzw. an seinem sich etwa trichterförmig nach unten verjüngenden Abschnitt einem relativ hohen Verschleiß unterworfen, da einerseits die während des Betriebs entlang der Behälterwandungen nach unten rutschenden, üblicherweise scharfkantigen Verteilgutpartikel einen mechanischen Abrieb verursachen und andererseits insbesondere die verbreitet verwendeten Mineraldünger eine korrosive Wirkung besitzen, was zu einem nicht unerheblichen Wartungsaufwand bis hin zur Notwendigkeit des Austauschs des gesamten Behälters führen kann. Darüber hinaus besteht häufig der Bedarf eines Austauschs der Streuwerke, wie beispielsweise zur Anpassung des Schleuderstreuers an unterschiedliche Verteilgüter mit sehr unterschiedlichen physikalischen Eigenschaften, wie insbesondere sehr verschiedener Fließfähigkeit und/oder stark verschiedenen Flugeigenschaften, z.B. einerseits Mineraldünger und andererseits Kalk, was bei gattungsgemäßen Schleuderstreuern allenfalls bedingt möglich ist.

Die DE 10 2010 000 296 A1 beschreibt einen Schleuderstreuer, insbesondere in Form eines Zweischeibenstreuers, dessen Vorratsbehälter einen von einem Rahmen getragenen Behälter zur Bevorratung des Verteilgutes aufweist, wobei der Behälter einen sich etwa trichterförmig nach unten verjüngenden Abschnitt mit einer Auslauföffnung aufweist. Der Auslauföffnung des trichterförmig verjüngten Abschnittes des Behälters ist ein Dosierorgan nachgeordnet, welches sich unmittelbar an den trichterförmig verjüngten Abschnitt des Behälters anschließt und unterhalb welchem sich die Verteilerscheibe befindet. Zum Schutz vor Korrosion ist der Behälter mit seinen beiden Auslauftrichtern einteilig aus einem Kunststoffmaterial ausgebildet, wodurch seiner Stabilität und folglich seinem Fassungsvermögen jedoch Grenzen gesetzt sind.

Der Erfindung liegt die Aufgabe zugrunde, einen Schleuderstreuer der eingangs genannten Art auf einfache und kostengünstiger Weise dahingehend weiterzubilden, dass unter zumindest weitgehender Vermeidung der vorgenannten Nachteile eine höhere Wartungsfreundlichkeit des Behälters sowie insbesondere auch ein einfacherer Austausch der Streuwerke ermöglicht wird.

Erfindungsgemäß wird diese Aufgabe bei einem Schleuderstreuer der eingangs genannten Art dadurch gelöst, dass die Auslauföffnung an einem separaten Auslaufteil des Behälters angeordnet ist, welches lösbar an dem sich im Wesentlichen trichterförmig nach unten verjüngenden Abschnitt des Behälters befestigt ist.

Die erfindungsgemäße Ausgestaltung sieht ein lösbar an dem sich im Wesentlichen trichterförmig nach unten verjüngenden Abschnitt des Behälters befestigbares Auslaufteil vor, welches im Falle eines Verschleißes einfach und kostengünstig austauschbar ist, ohne den gesamten Behälter anlässlich von Wartungs- oder Reparaturarbeiten demontieren oder gar austauschen zu müssen. Darüber hinaus lässt sich die Zugänglichkeit zu den herkömmlich üblicherweise an den sich trichterförmig nach unten verjüngenden Abschnitten des Behälters befestigten Streuwerken, insbesondere zu den Dosierorganen und gegebenenfalls zu der Aufgabepunkt-Verstelleinrichtung, durch Abnehmen des (jeweiligen) Auslaufteils deutlich vereinfachen, wodurch ein vereinfachter Austausch der Streuwerke gegen andere, für verschiedenartiges Verteilgut geeignete Streuwerke möglich ist, sofern dies erwünscht ist. Ferner eröffnet die erfindungsgemäße Ausgestaltung des Behälters insbesondere herstellerseitig die Möglichkeit, nur verschiedene Auslaufteile für unterschiedliche Typen von Schleuderstreuern vorzusehen, ohne den restlichen Behälter verändern zu müssen, d.h. es muss lediglich das Auslaufteil an den jeweiligen Schleuderstreuer, wie insbesondere an dessen Streuwerke, angepasst werden, wohingegen der restliche Behälter universell für verschiedene Streuertypen in Serienfertigung hergestellt werden kann.

Gemäß einer vorteilhaften Ausgestaltung kann vorgesehen sein, dass das Auslaufteil des Behälters aus einem Kunststoffwerkstoff gefertigt ist, so dass es einerseits gegenüber chemischen Angriffs verschiedener Verteilguttypen, wie insbesondere Mineraldünger, weitestgehend inert ist und andererseits ein relativ geringes Gewicht aufweist, um für eine einfache Handhabung anlässlich der Montage bzw. Demontage zu sorgen. Als Kunststoffwerkstoffe kommen grundsätzlich beliebige bekannte, z.B. faserverstärkte, Polymere einschließlich duroplastischer und thermoplastischer Polymere in Betracht, aus Gründen einer einfachen Herstellung sowie insbesondere einer guten Rezyklierbarkeit vorzugsweise aber thermoplastische Polymere, so dass das Auslaufteil vorteilhafterweise in Form eines Spritzgussteils ausgebildet sein kann. Darüber hinaus ergibt sich auf diese Weise keine Korrosionsgefahr auch an dem üblicherweise aus Metallwerkstoffen gefertigten Behälter, da sich zwischen dem sich im Wesentlichen trichterförmig nach unten verjüngenden Abschnitt des Behälters und dem hieran befestigten Auslaufabschnitt bei Exposition gegenüber Feuchtigkeit und Salzen, wie sie während des Betriebs von Schleuderstreuern üblicherweise auftritt, keine chemische Halbzelle bilden kann. Entsprechendes gilt für ein an dem Auslaufabschnitt des **Be**hälters festgelegtes Streuwerk.

Das Auslaufteil kann grundsätzlich in beliebiger bekannter Weise lösbar an dem sich im Wesentlichen trichterförmig nach unten verjüngenden Abschnitt des Behälters befestigt sein, wie beispielsweise kraft- und/oder formschlüssig mittels Rast-, Klemm- und/oder Schraubverbindungen.

In diesem Zusammenhang kann der sich im Wesentlichen trichterförmig nach unten verjüngende Abschnitt des Behälters beispielsweise eine Mehrzahl an Behälter-Befestigungsmitteln aufweisen, welche an dem Umfang des sich im Wesentlichen trichterförmig nach unten verjüngenden Abschnittes des Behälters angeordnet sind, wie z.B. um den Außenumfang des sich trichterförmig nach unten verjüngenden Abschnitt des Behälters verteilt, während das Auslaufteil hierzu komplementäre Auslaufteil-Befestigungsmittel aufweist.

Die Behälter-Befestigungsmittel des sich im Wesentlichen trichterförmig nach unten verjüngenden Abschnittes des Behälters können beispielsweise Befestigungslaschen umfassen, welche vorzugsweise wenigstens eine Befestigungsbohrung aufweisen, wobei die Auslaufteil-Befestigungsmittel des Auslaufteils mit wenigstens einer, hiermit fluchtenden Bohrung versehen sind, um letztere mit den Befestigungsbohrungen der Befestigungslaschen mittels Schrauben, Bolzen oder dergleichen lösbar verbinden zu können.

Um für eine im Wesentlichen staub- sowie insbesondere feuchtigkeitsdichte Verbindung zwischen dem Auslaufteil des Behälters und dessen sich im Wesentlichen trichterförmig nach unten verjüngenden Abschnitt zu sorgen, kann zwischen dem Auslaufteil und dem sich trichterförmig nach unten verjüngenden Abschnitt des Behälters ferner vorzugsweise ein Dichtring angeordnet sein, welcher insbesondere in einer Dichtringaufnahme des Auslaufteils eingelegt ist.

Während das Auslaufteil des Behälters grundsätzlich auch einstückig ausgestaltet und mit einem Boden versehen sein kann, in welchem die Auslauföffnung ausgebildet ist, kann gemäß einer vorteilhaften Weiterbildung vorgesehen sein, dass ein mit der Auslauföffnung versehener Boden des Auslaufteils als separates Bodenteil ausgebildet ist, welches an dem Auslaufteil festgelegt ist. Dies gibt die Möglichkeit, den am stärksten einem Verschleiß unterworfenen, von dem separaten Bodenteil gebildeten Boden aus einem besonders sowohl verschleiß- als auch korrosionsbeständigen Material zu fertigen, welches zugleich eine hohe Festigkeit besitzt.

Das separate Bodenteil kann demnach vorteilhafterweise aus einem korrosionsbeständigen Metallwerkstoff gefertigt sein, wie beispielsweise aus rostfreiem Stahl, welcher überdies eine hohe Festigkeit und Steifigkeit besitzt, um an dem Bodenteil des Auslaufteils des Behälters in als solcher bekannter Weise z.B. das Dosierorgan mit seinem Dosierschieber und gegebenenfalls eine Aufgabepunkt-Verstelleinrichtung sicher befestigen zu können.

Während das separate Bodenteil grundsätzlich auch fest mit dem Auslaufteil verbunden sein kann, indem es z.B. anlässlich dessen Fertigung in das Auslaufteil eingespritzt wird, ist in vorteilhafter Ausgestaltung vorgesehen, dass das Bodenteil lösbar an dem Auslaufteil des Behälters festgelegt ist, so dass es erforderlichenfalls einfach ausgetauscht werden kann und die Zugänglichkeit zu hieran befestigten Funktionsteilen des Schleuderstreuers, wie beispielsweise dem Dosierschieber des Dosierorgan, erleichtert. Darüber hinaus bietet ein separates, lösbar mit dem Auslaufteil verbundenes Bodenteil insbesondere die Möglichkeit, die Streuwerke des Schleuderstreuers in sehr einfacher und kostengünstiger Weise an verschiedene Verteilguttypen anzupassen, wie beispielsweise einerseits an relativ grobpartikulären und gut rieselfähigen Mineraldünger, andererseits an eher feinpartikulären und demgegenüber schlechter rieselfähigen Kalk, indem zwei oder mehrere separate Bodenteile mit verschiedenen, an den jeweiligen Verteilguttyp angepassten Auslauföffnungen bereitgehalten werden, welche dann je nach auszubringendem Verteilguttyp austauschbar an dem Auslaufteil des Behälters lösbar festgelegt werden können.

So kann das Bodenteil beispielsweise Befestigungslöcher aufweisen, welche mit Löchern des Auslaufteils des Behälters fluchten, um das Bodenteil an dem Auslaufteil zu verschrauben, wobei die Befestigungslöcher des Bodenteils bzw. die Löcher des Auslaufteils z.B. um den Umfang des Auslauf- und des Bodenteils verteilt angeordnet sein können.

Zur Erleichterung der Montage kann das Bodenteil ferner wenigstens eine Zentriereinrichtung aufweisen, welche zu wenigstens einer Zentriereinrichtung des Auslaufteils des Behälters komplementär ist. So können die zur Befestigung des Bodenteils an dem Auslaufteil dienenden Befestigungslöcher des Bodenteils beispielsweise an Erhebungen des Bodenteils angeordnet sein, welche in hierzu komplementäre Vertiefungen des Auslaufteils eingreifen, wenn das Bodenteils an dem Auslaufteil festgelegt worden ist.

Die Auslauföffnung des Bodenteils kann in als solcher bekannter Weise exzentrisch in Bezug auf eine Drehachse der dieser Auslauföffnung zugeordneten Verteilerscheibe angeordnet sein, wobei die Auslauföffnung insbesondere einerseits von einer randseitigen Ausnehmung des Bodenteils, andererseits von einem Umfangsabschnitt des Auslaufteils begrenzt sein kann.

Ferner kann das Bodenteil des Auslaufteils eine zentrale Durchgangsbohrung aufweisen, welche zur Lagerung einer ein Rührwerk tragenden Welle dient, bei welcher es sich insbesondere um die Welle handeln kann, welche die dem Auslaufteil zugeordnete Verteilerscheibe trägt.

Die zentrale Durchgangsbohrung des Bodenteils kann an einem flanschartigen, nach oben vorstehenden Vorsprung des Bodenteils angeordnet sein, so dass einerseits eine mechanische Versteifung des Bodenteils gegeben ist, andererseits das Verteilgut vom zentralen Bereich des Bodenteils fort in Richtung der Auslauföffnung geleitet wird.

Das Auslaufteil des Behälters kann überdies einen kreissegmentförmigen Außenumfangsabschnitt aufweisen, welcher als Führung für eine Aufgabepunkt-Verstelleinrichtung dient, welche - wie oben erwähnt - als Teil eines Streuwerks an der Unterseite des Bodenteils angeordnet sein kann.

Darüber hinaus kann vorgesehen sein, dass das Auslaufteil des Behälters eine die Stellung eines Dosierschiebers des Dosierorgans und/oder der Aufgabepunkt-Verstelleinrichtung identifizierende Skala aufweist, welche insbesondere in bzw. auf das als Spritzgussteil ausgebildete Auslaufteil eingespritzt bzw. aufgespritzt sein kann.

Gemäß einer vorteilhaften Weiterbildung kann vorgesehen sein, dass der Behälter einerseits ein Behälteroberteil, andererseits wenigstens ein hieran, vorzugsweise lösbar, befestigtes, separates, zumindest einen unteren Bereich des sich im Wesentlichen trichterförmig nach unten verjüngenden Abschnittes des Behälters bildendes Behälterunterteil aufweist, an welchem das Auslaufteil des Behälters befestigt ist. Der Behälter umfasst in diesem Fall folglich zum Einen das Behälteroberteil, zum Anderen das Behälterunterteil mit dem bzw. den sich im Wesentlichen trichterförmig nach unten verjüngenden Abschnitt(en) sowie das hieran lösbar befestigte Auslaufteil. Ein solchermaßen ausgestalteter Behälter bietet eine noch höhere Modularität, indem das Behälteroberteil herstellerseitig beispielsweise für eine Mehrzahl an verschiedenen Schleuderstreuertypen universell verwendet werden kann, während das Behälterunterteil bzw. das Auslassteil an den jeweiligen Streuertyp bzw. an das jeweilige Streuwerk angepasst werden kann.

Das Behälteroberteil und/oder das Behälterunterteil, welches beispielsweise in Form eines Tiefziehteils ausgestaltet sein kann, sind aus Stabilitätsgründen vorzugsweise aus einem Metallwerkstoff gefertigt, wobei insbesondere zumindest das einem erhöhten Verschleiß ausgesetzte Behälterunterteil vorteilhafterweise aus rostfreiem Stahl gefertigt sein kann.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Rückansicht einer Ausführungsform eines erfindungsgemäßen Schleuderstreuers in Form eines Zweischeibenstreuers;
- Fig. 2: eine schematische Draufsicht auf den Behälter des Schleuderstreuers gemäß Fig. 1;
- Fig. 3: eine schematische Explosionsdarstellung des Behälters gemäß Fig. 2 sowie eines Streuwerks und den Verteilerscheiben;
- Fig. 4: eine schematische perspektivische Detailansicht eines Behälterunterteils des Behälters gemäß Fig. 2;
- Fig. 5: eine schematische Explosionsdarstellung eines Auslaufteils des Behälters einschließlich seines Bodenteils gemäß Fig. 2;
- Fig. 6: eine schematische perspektivische Detailansicht des Auslaufteils mit Bodenteil gemäß Fig. 5 von schräg oben betrachtet;
- Fig. 7: eine schematische perspektivische Detailansicht des Auslaufteils mit Bodenteil gemäß Fig. 5 und 6 von schräg unten betrachtet;
- Fig. 8: eine schematische perspektivische Detailansicht des Auslaufteils gemäß Fig. 5 bis 7 ohne das Bodenteil von schräg oben betrachtet;
- Fig. 9: eine schematische perspektivische Detailansicht des Auslaufteils gemäß Fig. 5 bis 8 ohne das Bodenteil von schräg unten betrachtet;
- Fig. 10: eine schematische Detailansicht des Bodenteils des Auslaufteils gemäß Fig. 5 bis 7;
- Fig. 11: eine schematische Schnittansicht zur Veranschaulichung der lösbaren Befestigung des Auslaufteils an dem Behälterunterteil des Behälters; und
- Fig. 12: eine weitere schematische Schnittansicht zur Veranschaulichung der lösbaren Befestigung des Auslaufteils an dem Behälterunterteil des Behälters.

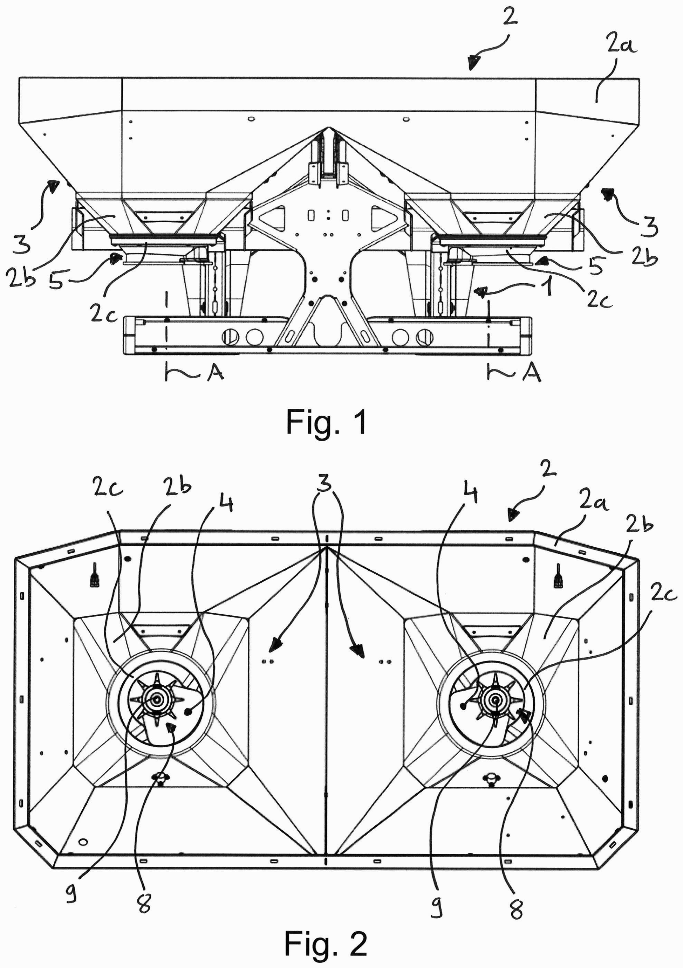

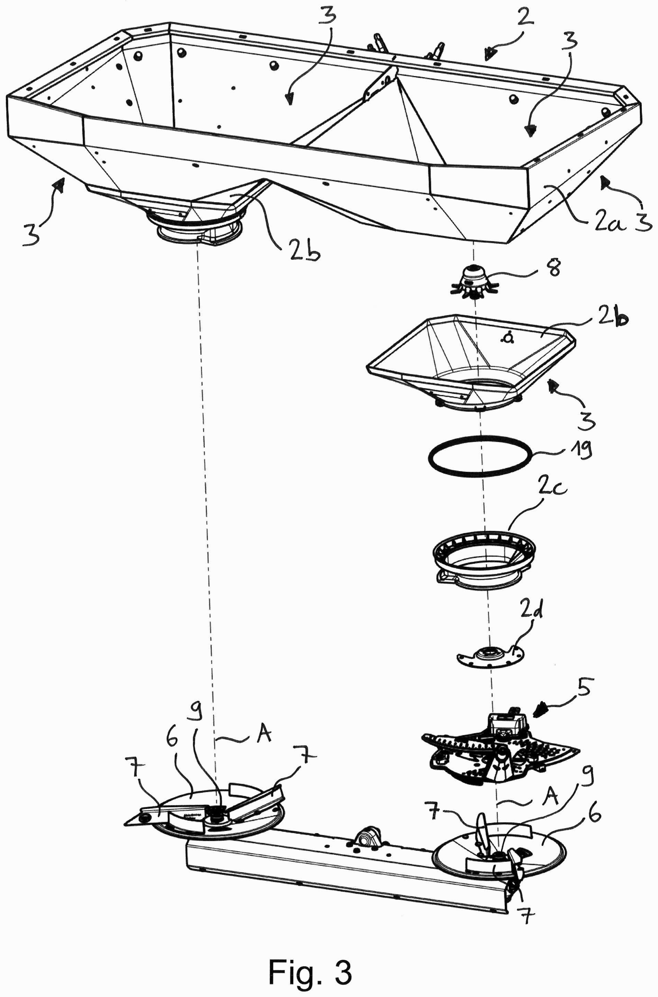

Der in der Fig. 1 schematisch wiedergegebene Schleuderstreuer ist in Form eines Zweischeibenstreuers für landwirtschaftliche Zwecke ausgestaltet und dient zum Ausbringen von pulver- bzw. partikelförmigem Verteilgut, wie beispielsweise Dünger oder Saatgut. Der Schleuderstreuer weist einen von einem Rahmen 1 getragenen Behälter 2 auf, welcher zur Bevorratung des pulver- bzw. partikelförmigem Verteilgutes dient. Der Behälter 2 umfasst im vorliegenden Fall zwei sich im Wesentlichen trichterförmig nach unten verjüngende Abschnitte 3, welche an ihrem unteren Ende jeweils eine in der Fig. 1 nicht erkennbare Auslauföffnung 4 aufweisen (vgl. z.B. die Fig. 2). Unmittelbar unterhalb einer jeweiligen Auslauföffnung 4 befindet sich ein nur in den Fig. 1 und 3 erkennbares Dosierorgan 5, welches als solches aus dem Stand der Technik bekannt ist und z.B. jeweils einen mit einer jeweiligen Auslauföffnung 4 zusammenwirkenden Dosierschieber umfasst, wobei die Dosierschieber der beiden Dosierorgane 5 vorzugsweise unabhängig voneinander steuer- und/oder regelbar sind, um einen der jeweiligen Soll-Verteilgutmenge entsprechenden Massenstrom an Verteilgut einstellen zu können. Wie in der Fig. 3 erkennbar, ist wiederum unterhalb eines jeweiligen Dosierorgans 5 je eine (in der Fig. 1 aus Veranschaulichungsgründen weggelassene) Verteilerscheibe 6 um je eine etwa vertikale Achse A drehbar gelagert, wobei die Verteilerscheiben 6 in üblicher Weise mit Wurfschaufeln 7 bestückt sind. Die mit den Wurfschaufeln 7 versehenen Verteilerscheiben 6 sind mittels geeigneter Antriebe gegensinnig drehangetrieben, wobei es sich bei den Antrieben beispielsweise um, vorzugsweise unabhängig voneinander drehzahlsteuerbare, Elektro- oder Hydraulikmotoren (nicht gezeigt) handeln kann. Wie wiederum in der Fig. 1 erkennbar, ist der Zweischeibenstreuer im vorliegenden Fall als Anbaugerät ausgestaltet, dessen Rahmen 1 an seiner in der Fig. 1 nicht sichtbaren Vorderseite (in Fahrtrichtung betrachtet) eine Befestigungseinrichtung (nicht gezeigt) umfasst, welche zur Aufnahme des Zweischeibenstreuers mittels des Dreipunkt-Krafthebers einer Zugmaschine (ebenfalls nicht gezeigt), wie eines Traktors, dient. Aus den Fig. 2 und 3 ergibt sich ferner, dass oberhalb einer jeweiligen Auslauföffnung 4 des Behälters 2 ein Rührwerk 8 angeordnet ist, welches koaxial zu einer jeweiligen Verteilerscheibe 6 auf einer diese tragenden Welle 9 gelagert ist und über einen zeichnerisch nicht erkennbaren Rührwerksantrieb verfügt.

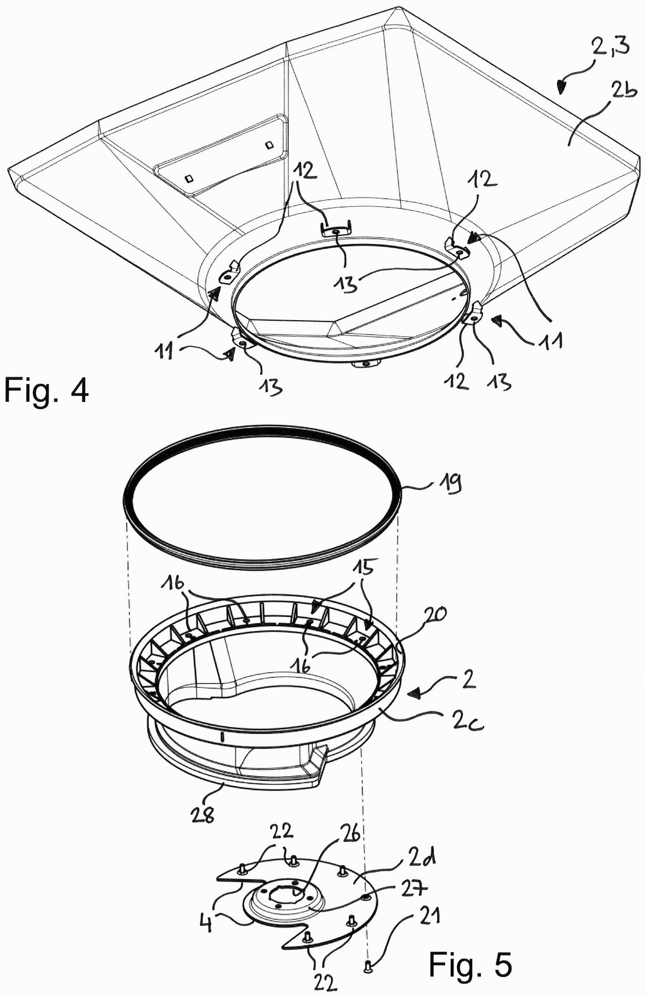

Wie insbesondere den Fig. 3 und 4, aber auch den Fig. 1 und 2 zu entnehmen ist, ist der Behälter 2 des Schleuderstreuers mehrteilig ausgestaltet und umfasst einerseits ein Behälteroberteil 2a, welches einen etwa rechteckförmigen oberen Öffnungsrand des Behälters 2 begrenzt und die oberen Bereiche der beiden sich nach unten etwa trichterförmig verjüngenden Abschnitte 3 des Behälters 2 umfasst, andererseits zwei separate Behälterunterteile 2b, (vgl. auch die Detailansicht der Fig. 4), welche an dem Behälteroberteil 2a lösbar, z.B. mittels Schrauben, festgelegt sind und die unteren Bereiche der beiden sich nach unten etwa trichterförmig verjüngenden Abschnitte 3 des Behälters 2 umfassen. Das obere Behälterteil 2a und die unteren Behälterteile 2b sind beispielsweise aus einem Metallwerkstoff, wie Stahl, gefertigt, wobei zumindest die unteren Behälterteile 2b vorzugsweise aus rostfreiem Stahl gefertigt sein können.

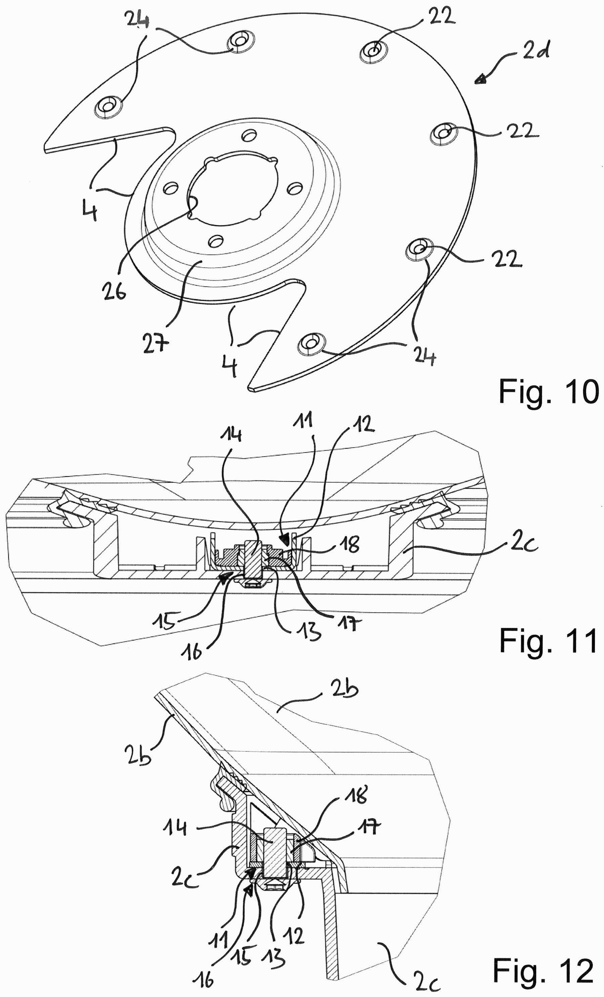

An einem jeweiligen der beiden sich im Wesentlichen trichterförmig nach unten verjüngenden Abschnitte 3 des Behälters 2 - oder genauer: an einem jeweiligen Behälterunterteil 2b desselben - ist je ein separates Auslaufteil 2c des Behälters 2 lösbar befestigt, welches im vorliegenden Fall als Spritzgussteil aus einem thermoplastischen Kunststoffwerkstoff gefertigt ist und ein mit der Auslauföffnung 4 versehenes, separates Bodenteil 2d aus einem verschleiß- und korrosionsbeständigen Metallwerkstoff, z.B. aus rostfreiem Stahl, aufweist, welches an dem Auslaufteil 2c des Behälters 2 lösbar festgelegt ist (vgl. insbesondere die Fig. 3 sowie 5 bis 9). Ein jeweiliges Auslaufteil 2c des Behälters 2 ist dabei an einem jeweiligen, sich etwa trichterförmig nach unten verjüngenden Behälterunterteil 2b des Behälters 2 kraft- und formschlüssig mittels einer Mehrzahl an Schrauben 14 (vgl. die Schnittansichten der Fig. 11 und 12) lösbar befestigt, wobei die Behälterunterteile 2b, welche sich im Wesentlichen trichterförmig nach unten verjüngen, zu diesem Zweck mit einer Mehrzahl an Behälter-Befestigungsmitteln 11 ausgestattet sind, welche an dem Außenumfang eines jeweiligen, sich etwa trichterförmig nach unten verjüngenden Behälterunterteils 2b angeordnet sind und bei dem zeichnerisch wiedergegebenen Ausführungsbeispiel von etwa U-förmigen Befestigungslaschen 12 gebildet sind, deren U-Schenkel am Außenumfang eines jeweiligen Behälterunterteils 2b befestigt, z.B. verschweißt, sind und deren U-Steg mit einer Befestigungsbohrung 13 versehen ist (vgl. insbesondere die Fig. 4). Ein jeweiliges Auslaufteil 2c ist mit zu den Befestigungsbohrungen 13 der Behälter-Befestigungsmittel 11 der Behälterunterteile 2b komplementären Auslaufteil-Befestigungsmitteln 15 ausgestattet, welche ihrerseits von Bohrungen 16 gebildet sind, welche mit den Befestigungsbohrungen der Behälter-Befestigungsmittel 11 fluchten, um sie mittels der Schrauben 14 zu verbinden. Wie in den Fig. 11 und 12 erkennbar, kann zum Zwecke einer einfachen Montage beispielsweise vorgesehen sein, dass die Schrauben 14 mit Mehrkantmuttern 17 im Eingriff stehen, welche mittels einer Verdrehsicherung 18 zwischen den U-Stegen der Befestigungslaschen 12 der Behälter-Befestigungsmitteln 11 eines jeweiligen Behälterunterteils 2b eingebracht sind. Wie aus den Fig. 3 und 5 hervorgeht, kann zwischen einem jeweiligen Auslaufteil 2c des Behälters 2 und einem jeweiligen Behälterunterteil 2b, welches den unteren Bereich eines jeweiligen, sich im Wesentlichen trichterförmig nach unten verjüngenden Abschnittes des Behälters 2 bildet, ein Dichtring 19 angeordnet sein, welcher in einer Dichtringaufnahme 20 des Auslaufteils 2c eingelegt ist und für eine staub- und feuchtigkeitsdichte Abdichtung sorgt.

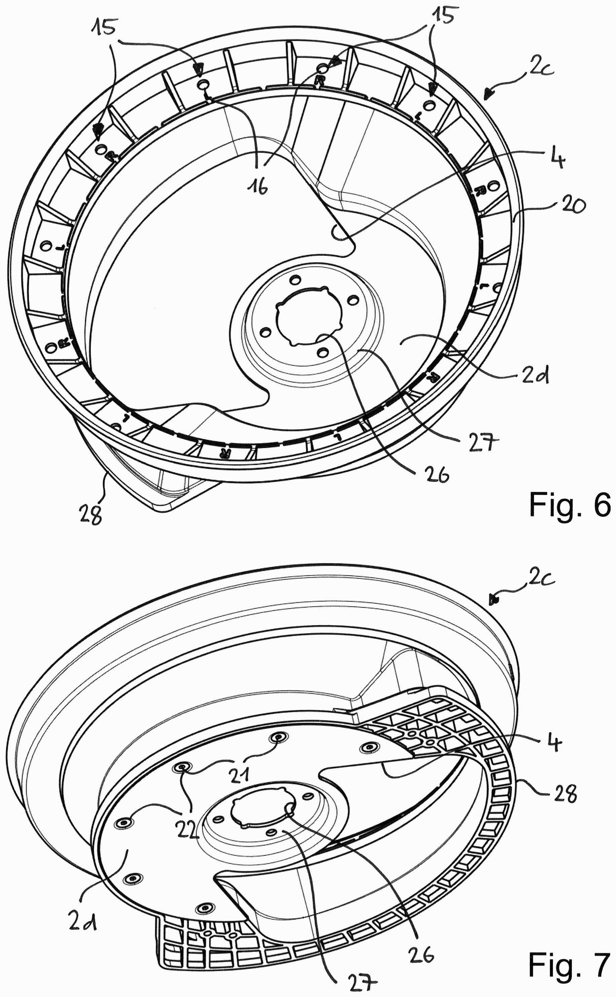

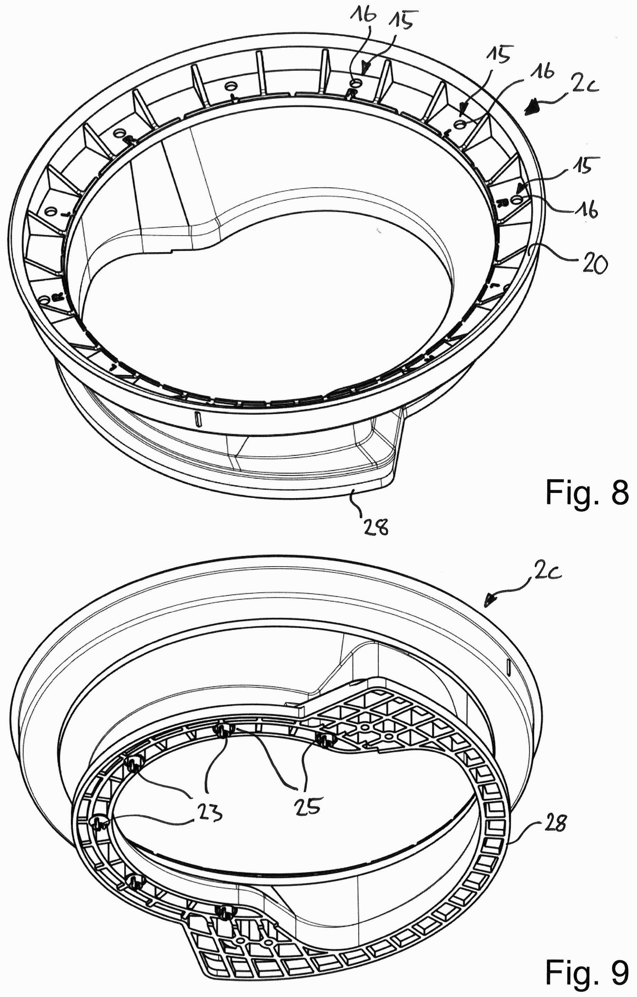

Ein jeweiliges Bodenteil 2d ist ebenfalls lösbar an der einem jeweiligen Behälterunterteil 2b entgegengesetzten, unteren Seite eines jeweiligen Auslaufteils 2c des Behälters 2 festgelegt, was wiederum mittels Schrauben 21 geschehen kann (vgl. die Fig. 5 und 7), welche einerseits Befestigungslöcher 22 des Bodenteils 2d und andererseits hiermit fluchtende Löcher 23 des Auslaufteils 2c des Behälters 2 durchgreifen (vgl. die Fig. 5, 7, 9 und 10). Das Bodenteil 2d umfasst im vorliegenden Fall ferner eine Zentriereinrichtung in Form von Erhebungen 24, welche aus der Ebene des Bodenteils 2d, z.B. ein jeweiliges Befestigungsloch 22 umgebend, herausgeformt sind (siehe die Fig. 10) und zu einer Zentriereinrichtung des Auslaufteils 2c des Behälters 2 in Form von Vertiefungen 25, welche an der dem Bodenteil 2d zugewandten Unterseite des Auslaufteils 2c, z.B. ein jeweiliges Loch 23 umgebend, ausgebildet sind (siehe die Fig. 9), komplementär sind. Eine jeweilige Auslauföffnung 4 eines jeweiliges Bodenteils 2d des Behälters 2 ist im vorliegenden Fall exzentrisch in Bezug auf die Drehachse A der der jeweiligen Auslauföffnung 4 zugeordneten Verteilerscheibe 6 angeordnet, wobei die Auslauföffnung 4 einerseits von einer randseitigen Ausnehmung des Bodenteils 2d, andererseits von einem Umfangsabschnitt des Auslaufteils 2c begrenzt ist (vgl. insbesondere die Fig. 6 und 7). In seinem Mittelbereich ist das Bodenteil 2d eines jeweiligen Auslaufteils 2c mit einer zentralen Durchgangsbohrung 26 versehen, welche z.B. an einem flanschartigen, nach oben vorstehenden Vorsprung 27 des Bodenteils 2d angeordnet ist und zur Lagerung der das Rührwerk 8 tragenden Welle 9 dient (vgl. hierzu die Fig. 3). Darüber hinaus ist ein jeweiliges Auslaufteil 2c des Behälters 2 mit einem kreissegmentförmigen Außenumfangsabschnitt 28 ausgestattet, welcher als Führung für eine nicht zeichnerisch dargestellte, in Umfangsrichtung einer jeweiligen Verteilerscheibe 6 wirksamen Aufgabepunkt-Verstelleinrichtung dient, wie sie als solche aus dem Stand der Technik bekannt ist, wobei exemplarisch auf die EP 1 738 632 A1 verwiesen sei.

## Patentansprüche

1. Schleuderstreuer zum Ausbringen von Verteilgut, umfassend:
- wenigstens einen von einem Rahmen (1) getragenen Behälter (2) zur Bevorratung des Verteilgutes, wobei der Behälter (2) wenigstens einen, sich im Wesentlichen trichterförmig nach unten verjüngenden Abschnitt (3) mit wenigstens einer Auslauföffnung (4) aufweist,
- wenigstens ein der Auslauföffnung (4) nachgeordnetes Dosierorgan (5), und
- wenigstens eine dem Dosierorgan (5) nachgeordnete Verteilerscheibe (6),
**dadurch gekennzeichnet, dass** die Auslauföffnung (4) an einem separaten Auslaufteil (2c) des Behälters (2) angeordnet ist, welches lösbar an dem sich im Wesentlichen trichterförmig nach unten verjüngenden Abschnitt (3) des Behälters (2) befestigt ist.

2. Schleuderstreuer nach Anspruch 1, **dadurch gekennzeichnet, dass** das Auslaufteil (2c) aus einem Kunststoffwerkstoff gefertigt ist, wobei es insbesondere in Form eines Spritzgussteils ausgebildet ist.

3. Schleuderstreuer nach Anspruch 1 oder 2, **dadurch gekennzeichnet, dass** das Auslaufteil (2c) kraft- und/oder formschlüssig an dem sich im Wesentlichen trichterförmig nach unten verjüngenden Abschnitt (3) des Behälters (2) lösbar befestigt ist.

4. Schleuderstreuer nach einem der Ansprüche 1 bis 3, **dadurch gekennzeichnet, dass**
- der sich im Wesentlichen trichterförmig nach unten verjüngende Abschnitt (3) des Behälters (2) eine Mehrzahl an Behälter-Befestigungsmitteln (11) aufweist, welche an dem Umfang des sich im Wesentlichen trichterförmig nach unten verjüngenden Abschnittes (3) des Behälters (2) angeordnet sind, und
- das Auslaufteil (2c) hierzu komplementäre Auslaufteil-Befestigungsmittel (15) aufweist.

5. Schleuderstreuer nach Anspruch 4, **dadurch gekennzeichnet, dass** die Behälter-Befestigungsmittel (11)
- Befestigungslaschen (12) umfassen und/oder
- wenigstens eine Befestigungsbohrung (13) aufweisen und die Auslaufteil-Befestigungsmittel (15) mit wenigstens einer, hiermit fluchtenden Bohrung (16) versehen sind.

6. Schleuderstreuer nach einem der Ansprüche 1 bis 5, **dadurch gekennzeichnet, dass** zwischen dem Auslaufteil (2c) des Behälters (2) und dessen sich im Wesentlichen trichterförmig nach unten verjüngenden Abschnitt (3) ein Dichtring (19) angeordnet ist, welcher insbesondere in einer Dichtringaufnahme (20) des Auslaufteils (2c) eingelegt ist.

7. Schleuderstreuer nach einem der Ansprüche 1 bis 6, **dadurch gekennzeichnet, dass** ein mit der Auslauföffnung (4) versehener Boden des Auslaufteils (2c) als separates Bodenteil (2d) ausgebildet ist, welches an dem Auslaufteil (2c) festgelegt ist.

8. Schleuderstreuer nach Anspruch 7, **dadurch gekennzeichnet, dass** das Bodenteil (2d) aus einem Metallwerkstoff, insbesondere aus rostfreiem Stahl, gefertigt ist.

9. Schleuderstreuer nach Anspruch 7 oder 8, **dadurch gekennzeichnet, dass** das Bodenteil (2d) lösbar an dem Auslaufteil (2c) des Behälters (2) festgelegt ist, wobei das Bodenteil (2d) insbesondere
- Befestigungslöcher (22) aufweist, welche mit Löchern (23) des Auslaufteils (2c) des Behälters (2) fluchten, um das Bodenteil (2d) an dem Auslaufteil (2c) zu verschrauben; und/oder
- wenigstens eine Zentriereinrichtung aufweist, welche zu wenigstens einer Zentriereinrichtung des Auslaufteils (2c) des Behälters (2) komplementär ist.

10. Schleuderstreuer nach einem der Ansprüche 7 bis 9, **dadurch gekennzeichnet, dass** die Auslauföffnung (4) des Bodenteils (2c) exzentrisch in Bezug auf eine Drehachse (A) der dieser Auslauföffnung (4) zugeordneten Verteilerscheibe (6) angeordnet ist, wobei die Auslauföffnung (4) insbesondere einerseits von einer randseitigen Ausnehmung des Bodenteils (2d), andererseits von einem Umfangsabschnitt des Auslaufteils (2c) begrenzt ist.

11. Schleuderstreuer nach einem der Ansprüche 7 bis 10, **dadurch gekennzeichnet, dass** das Bodenteil (2d) ferner eine zentrale Durchgangsbohrung (26) aufweist, welche zur Lagerung einer ein Rührwerk (8) tragenden Welle (9) dient, wobei die zentrale Durchgangsbohrung (26) des Bodenteils (2d) insbesondere an einem flanschartigen, nach oben vorstehenden Vorsprung (27) des Bodenteils (2d) angeordnet ist.

12. Schleuderstreuer nach einem der Ansprüche 1 bis 11, **dadurch gekennzeichnet, dass** das Auslaufteil (2c) des Behälters (2) einen kreissegmentförmigen Außenumfangsabschnitt (28) aufweist, welcher als Führung für eine Aufgabepunkt-Verstelleinrichtung dient.

13. Schleuderstreuer nach einem der Ansprüche 1 bis 12, **dadurch gekennzeichnet, dass** das Auslaufteil (2c) des Behälters (2) eine die Stellung eines Dosierschiebers des Dosierorgans (5) und/oder der Aufgabepunkt-Verstelleinrichtung identifizierende Skala aufweist, welche insbesondere in bzw. auf das als Spritzgussteil ausgebildete Auslaufteil (2c) eingespritzt bzw. aufgespritzt ist.

14. Schleuderstreuer nach einem der Ansprüche 1 bis 13, **dadurch gekennzeichnet, dass** der Behälter (2) einerseits ein Behälteroberteil (2a), andererseits wenigstens ein hieran befestigtes, separates, zumindest einen unteren Bereich des sich im Wesentlichen trichterförmig nach unten verjüngenden Abschnittes (3) des Behälters (2) bildendes Behälterunterteil (2b) aufweist, an welchem das Auslaufteil (2c) des Behälters (2) lösbar befestigt ist, wobei das wenigstens eine Behälterunterteil (2b) insbesondere
- in Form eines Tiefziehteils ausgebildet und/oder
- lösbar an dem Behälteroberteil (2a) befestigt ist.

15. Schleuderstreuer nach Anspruch 14, **dadurch gekennzeichnet, dass** das Behälteroberteil (2a) und/oder das Behälterunterteil (2b) aus einem Metallwerkstoff, insbesondere aus rostfreiem Stahl, gefertigt ist bzw. sind.
